(19) Europäisches Patentamt / European Patent Office / Office européen des brevets

(11) **EP 3 625 549 B1**

(12) **FASCICULE DE BREVET EUROPEEN**

(45) Date de publication et mention de la délivrance du brevet:
**28.07.2021 Bulletin 2021/30**

(21) Numéro de dépôt: **18728062.3**

(22) Date de dépôt: **17.05.2018**

(51) Int Cl.:
*G01N 21/53* [(2006.01)]     *G01N 1/20* [(2006.01)]
*G01N 15/02* [(2006.01)]     *G01N 15/06* [(2006.01)]
*G01N 1/22* [(2006.01)]     *G01N 15/00* [(2006.01)]
*G01N 21/47* [(2006.01)]

(86) Numéro de dépôt international:
**PCT/EP2018/063018**

(87) Numéro de publication internationale:
**WO 2018/211049 (22.11.2018 Gazette 2018/47)**

(54) **CAPTEUR POUR LA MESURE DE LA CONCENTRATION DE PARTICULES DANS L'AIR**

SENSOR ZUR MESSUNG DER PARTIKELKONZENTRATION IN DER LUFT

SENSOR FOR MEASURING THE CONCENTRATION OF PARTICULATES IN THE AIR

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **17.05.2017 FR 1754366**

(43) Date de publication de la demande:
**25.03.2020 Bulletin 2020/13**

(73) Titulaire: **ECO Logic Sense SAS**
**13790 Rousset (FR)**

(72) Inventeurs:
- **DUMAS, Antoine**
  **13004 Marseille (FR)**
- **GOUVERNEUR, Guillaume**
  **75015 Paris (FR)**
- **GLAVATSKAYA, Yulia**
  **78170 La Celle Saint Cloud (FR)**
- **MARTINELL, Amanda**
  **78640 Neauphle le Château (FR)**

(74) Mandataire: **Lebkiri, Alexandre**
**Cabinet Camus Lebkiri**
**25, Rue de Maubeuge**
**75009 Paris (FR)**

(56) Documents cités:
EP-A2- 2 679 985     WO-A1-2016/065465
US-A1- 2005 190 058

- **SUN JIANWEN ET AL: "A system of continuous particles monitoring using virtual impactor", 2015 12TH IEEE INTERNATIONAL CONFERENCE ON ELECTRONIC MEASUREMENT & INSTRUMENTS (ICEMI), IEEE, vol. 3, 16 juillet 2015 (2015-07-16), pages 1183-1187, XP032913327, DOI: 10.1109/ICEMI.2015.7494466**
- **DONG MINGZHI ET AL: "Integrated Virtual Impactor Enabled PM2.5 Sensor", IEEE SENSORS JOURNAL, IEEE SERVICE CENTER, NEW YORK, NY, US, vol. 17, no. 9, 1 mai 2017 (2017-05-01), pages 2814-2821, XP011645742, ISSN: 1530-437X, DOI: 10.1109/JSEN.2017.2683443 [extrait le 2017-04-10]**
- **RENSHENG DENG ET AL: "Focusing Particles with Diameters of 1 to 10 Microns into Beams at Atmospheric Pressure", AEROSOL SCIENCE AND TECHNOLOGY., vol. 42, no. 11, 25 septembre 2008 (2008-09-25), pages 899-915, XP055282336, US ISSN: 0278-6826, DOI: 10.1080/02786820802360674**
- **Anonymous: "Ambient Air Quality Monitoring - Continuous Particulates Analyzer CPA", , 12 février 2017 (2017-02-12), pages 1-2, XP055442261, Extrait de l'Internet: URL:https://web.archive.org/web/2017021201 5558if_/http://hnunordion.fi/environnement /netissa/CPA%20HNU.pdf [extrait le 2018-01-18]**

- WENJIA SHAO ET AL: "Fine Particle Sensor Based on Multi-Angle Light Scattering and Data Fusion", SENSORS, vol. 17, no. 5, 4 mai 2017 (2017-05-04), pages 1033-1, XP055442307, DOI: 10.3390/s17051033
- IGOR PAPROTNY ET AL: "Microfabricated air-microfluidic sensor for personal monitoring of airborne particulate matter: Design, fabrication, and experimental results", SENSORS AND ACTUATORS A: PHYSICAL, vol. 201, 18 janvier 2013 (2013-01-18), pages 506-516, XP055228674, NL ISSN: 0924-4247, DOI: 10.1016/j.sna.2012.12.026
- YUEN LEON ET AL: "Microfluidic-based real-time detector for fine particulate matter", IEEE SENSORS 2014 PROCEEDINGS, IEEE, 2 novembre 2014 (2014-11-02), pages 775-778, XP032705426, DOI: 10.1109/ICSENS.2014.6985114

**Description**

**DOMAINE TECHNIQUE DE L'INVENTION**

Le domaine technique de l'invention est celui des capteurs de pollution atmosphérique. La présente invention concerne un capteur pour la mesure de la concentration de particules dans l'air, aussi bien dans un environnement intérieur, confiné, que dans un environnement extérieur, de plein air.

**ARRIERE-PLAN TECHNOLOGIQUE DE L'INVENTION**

La qualité de l'air est un paramètre essentiel pour assurer une bonne qualité de vie, notamment dans les villes et dans les agglomérations urbaines. Parmi les causes de pollution atmosphérique, les particules de quelques $\mu$m de diamètre sont particulièrement dangereuses pour la santé humaine. Ces particules sont produites en grande partie par des activités humaines liées à l'industrie et aux transports. Elles sont responsables de risques sanitaires tels que l'altération des fonctions pulmonaires et peuvent entraîner une diminution de l'espérance de vie.

Les épisodes de pollution atmosphérique intense devenant de plus en plus fréquents, les institutions doivent mettre en place des solutions pour contrer ces phénomènes. Ces solutions requièrent un suivi en temps réel de la concentration atmosphérique de particules fines. La nécessité de déployer un réseau dense de capteurs est de plus en plus ressentie.

Les particules fines PM (de l'anglais « Particulate Matter ») sont des particules ayant un diamètre aérodynamique inférieur à 10 $\mu$m ; elles ne sont pas retenues par les voies aériennes supérieures (nez, bouche) et sont donc « respirables ». Les particules fines PM sont souvent classées suivant leur taille. On utilise l'appellation PM10 pour les particules ayant un diamètre aérodynamique inférieur à 10 $\mu$m ; PM2.5 pour les particules de diamètre aérodynamique inférieur à 2,5 $\mu$m et PM1 pour les particules de diamètre aérodynamique inférieur à 1 $\mu$m. Le diamètre aérodynamique d'une particule est une grandeur équivalente utilisée pour décrire le comportement aéraulique de particules dans un flux gazeux tel qu'un flux d'air. Le diamètre aérodynamique d'une particule est défini comme étant le diamètre d'une sphère de densité unitaire (1 g/cm$^3$) et ayant la même vitesse limite de chute que ladite particule dans un fluide au repos. Dans la suite de la présente demande, on emploie indifféremment les termes « diamètre aérodynamique d'une particule » et « diamètre d'une particule ».

Aujourd'hui, deux méthodes de mesure des particules sont principalement utilisées :

- les techniques gravimétriques consistent à accumuler les particules sur un filtre puis à les quantifier par pesée directe ou indirecte ;
- les techniques optiques reposent sur la perturbation d'un faisceau lumineux par le passage des particules à travers le faisceau lumineux.

Les dispositifs gravimétriques les plus simples fonctionnent par impaction des particules sur un filtre qui est ensuite pesé. Ces dispositifs ont une bonne sélectivité en taille et sont relativement peu onéreux mais ils ne permettent pas un suivi en temps réel de la concentration de particules.

Les systèmes à jauge beta reposent sur une technique d'absorption d'électrons. Ces systèmes ont l'avantage d'être très fiables mais, en plus de leur coût élevé, ils nécessitent une source radioactive ce qui peut diminuer leur portabilité.

Les systèmes gravimétriques TEOM® (de l'anglais « Tapered Element Oscillating Microbalance ») utilisent une microbalance et sont employés pour le suivi réglementaire dans certains pays. Ces systèmes permettent le suivi en temps réel de la concentration en particules mais ils ne permettent pas une bonne sélectivité et demeurent relativement onéreux.

Le document WO 2016/065465 A1 divulgue un appareil de surveillance de matière particulaire qui comprend un passage d'écoulement de fluide. Certains modes de réalisation comprennent une cartouche définissant une partie du passage d'écoulement de fluide s'étendant d'une entrée de cartouche à une sortie de cartouche et un sélecteur de taille de particule dans le passage d'écoulement de fluide entre l'entrée de cartouche et la sortie de cartouche. Le sélecteur de taille de particule comprend une section de courbe dans le passage d'écoulement de fluide où l'écoulement de fluide subit un changement de direction et une surface d'impact s'étendant transversalement par rapport au passage d'écoulement de fluide sur l'extérieur de la courbe. Un compteur de particules est situé en aval du sélecteur de taille de particule. Une pompe est raccordée pour entraîner un écoulement d'un fluide contenant la matière particulaire à travers le passage d'écoulement de fluide. L'appareil peut être rendu compact. Des modes de réalisation peuvent être portés et utilisés pour surveiller l'exposition de personnes à une matière particulaire. Des exemples de modes de réalisation peuvent être portés en tant que dispositifs personnels portables, fixés en place pour surveiller la matière particulaire dans des zones spécifiques, intégrés dans un appareil de chauffage, ventilation et climatisation (CVC) ou disposés dans des dispositifs portatifs pour des essais ponctuels.

Le document EP 2 679 985 A2 divulgue un dispositif de détection de fluorescence de particules en temps réel comprenant une pluralité d'impacteurs virtuels adaptés pour séparer et concentrer des particules.

Le document US 2005/190058 A1 divulgue un système, dans lequel des particules en suspension dans l'air sont percutées sur une surface de collecte puis analysées, et la surface de collecte est régénérée. L'analyse peut porter sur une ou plusieurs propriétés d'intérêt, telles que la concentration de substances biologiques en suspension dans l'air.

Les dispositifs exploitant des techniques optiques sont compacts, portables et ils permettent une sélectivité en taille des particules. Ces dispositifs sont les plus adaptés pour apporter des informations en temps réel aux particuliers mais souffrent d'une dérive importante liée à l'encrassement : ils requièrent donc une maintenance et un nettoyage réguliers, qui peuvent s'avérer coûteux et/ou malaisés.

**RESUME DE L'INVENTION**

L'invention offre une solution aux problèmes évoqués précédemment, en permettant de mesurer en temps réel la concentration de particules dans l'air avec un dispositif à la fois compact, portable et sélectif en taille pour les particules, tout en ne nécessitant aucune maintenance ni nettoyage.

Un aspect de l'invention concerne un capteur pour la mesure en temps réel de la concentration de particules dans l'air caractérisé en ce qu'il comporte un canal interne ayant :

- une première portion comportant une paroi latérale s'étendant entre une première extrémité ouverte et une deuxième extrémité fermée, la première extrémité ouverte s'étendant suivant un plan d'entrée ;
- une deuxième portion communiquant avec la première portion via une première ouverture dans la paroi latérale de la première portion, la première ouverture étant adjacente à la première extrémité ouverte ;
- une zone de stockage communiquant avec la première portion via une deuxième ouverture dans la paroi latérale de la première portion, la deuxième ouverture étant adjacente à la deuxième extrémité fermée, les première et deuxième ouvertures étant agencées de part et d'autre de la paroi latérale ;
- une plaque de déflexion fixée à une jonction entre la première extrémité ouverte de la première portion et la deuxième portion, la plaque de déflexion s'étendant à l'intérieur de la première portion et formant avec une première direction normale au plan d'entrée un angle $\alpha$ tel que :
  $$0° < \alpha < 90°$$

la plaque de déflexion, la première portion et les première et deuxième ouvertures étant dimensionnées de manière que dans un flux d'air entrant dans le capteur par la première extrémité ouverte et comportant des premières particules de diamètre inférieur ou égal à 10 $\mu$m et des deuxièmes particules de diamètre supérieur à 10 $\mu$m, les première particules sont déviées par la plaque de déflexion, passent par la première ouverture et parviennent dans la deuxième portion du canal interne tandis que les deuxième particules sont déviées par la plaque déflexion, impactées par une partie de la paroi latérale formant une plaque d'impaction, passent par la deuxième ouverture et parviennent dans la zone de stockage.

Grâce à l'invention, le canal interne du capteur assure en entrée une fonction de filtre : seules les premières particules pénètrent dans la deuxième portion du canal interne pour être ultérieurement détectées, tandis que les deuxièmes particules sont déviées dans une zone de stockage. Les première et deuxième particules, de tailles différentes, sont en effet de masses et donc d'inerties différentes, c'est pourquoi elles ne suivent pas le même chemin fluidique. On évite ainsi un encrassement de la deuxième portion du canal interne par les deuxièmes particules, qui entraînerait une dérive de la réponse du capteur et des artefacts de mesure. Aucune mesure n'étant réalisée dans la zone de stockage, son encrassement par les deuxièmes particules n'est pas problématique.

Outre les caractéristiques qui viennent d'être évoquées dans le paragraphe précédent, le capteur selon un aspect de l'invention peut présenter une ou plusieurs caractéristiques complémentaires parmi les suivantes, considérées individuellement ou selon toutes les combinaisons techniquement possibles :

- La deuxième portion du canal interne présente une première extrémité ouverte communiquant avec la première portion du canal interne et une deuxième extrémité ouverte, et le capteur comporte un dispositif de mise en circulation d'un flux d'air dans le canal interne, ledit dispositif étant agencé à la deuxième extrémité de la deuxième portion du canal interne et étant configuré pour faire circuler un flux d'air depuis la première extrémité de la première portion du canal interne vers la deuxième extrémité de la deuxième portion du canal interne.

- Le dispositif de mise en circulation d'un flux d'air dans le canal interne est un ventilateur ou une pompe.

- Ayant défini une première surface d'écoulement qui est la surface suivant le plan d'entrée de la première extrémité ouverte, et une deuxième surface d'écoulement qui est la plus petite surface d'écoulement de la première portion, définie entre l'extrémité de la plaque de déflexion et la paroi latérale : le rapport S2/S1 de la deuxième surface sur la première surface est tel que :

$$10\% \leq \frac{S2}{S1} \leq 90\%$$

- La deuxième portion du canal interne présentant une première extrémité ouverte communiquant avec la première portion du canal interne et une deuxième extrémité ouverte, et la deuxième portion du canal interne comportant une zone de détection, une zone amont entre la première extrémité et la zone de détection et une zone aval entre la zone de détection et la deuxième extrémité, le capteur est préférentiellement tel que :

  ◦ la deuxième portion du canal interne présente une forme repliée, et
  ◦ la zone amont du canal interne présente une portion inclinée s'élargissant entre la première extrémité du canal interne et la zone de détection,

    ▪ la portion inclinée formant un angle β, mesuré par rapport à la verticale, tel que : 60° ≤ β ≤ 80°, et
    ▪ la portion inclinée s'élargissant de 150 μm² à 300 μm² par mm de longueur.

- La zone de stockage présente un volume compris entre 0,5 mL et 5 mL.

- La première portion du canal interne est de section circulaire et le capteur comporte une pièce d'adaptation en forme de cylindre creux de section circulaire, la pièce d'adaptation faisant saillie du capteur au niveau de la première extrémité ouverte de la première portion.

- La deuxième portion présente une première extrémité ouverte qui communique avec la première portion et une deuxième extrémité ouverte ; une zone de détection ; une zone amont entre la première extrémité et la zone de détection ; et une zone aval entre la zone de détection et la deuxième extrémité ; la deuxième portion présente une forme repliée avec une première branche rectiligne reliée à une deuxième branche rectiligne par une liaison sensiblement perpendiculaire aux première et deuxième branches rectilignes, de manière que la zone amont comporte la première branche rectiligne, la zone aval comporte la deuxième branche rectiligne et la zone de détection se trouve dans la liaison entre les première et deuxième branches rectilignes.

- La zone amont comporte en outre au moins une portion présentant une forme en S avec des premier et deuxième coudes.

- Le canal interne s'étendant en chaque point suivant une direction Dc et « section d'une portion du canal interne » signifiant une section normale à la direction Dc : la deuxième portion présente une première extrémité ouverte qui communique avec la première portion et une deuxième extrémité ouverte ; une zone de détection ; une zone amont entre la première extrémité et la zone de détection ; et une zone aval entre la zone de détection et la deuxième extrémité ; et la zone amont de la deuxième portion comporte un élément de laminarisation, qui comporte au moins une plaque faisant saillie radialement d'une paroi latérale de la deuxième portion, ladite au moins une plaque présentant une hauteur H mesurée radialement et dont le rapport sur la hauteur totale Ht mesurée radialement entre la paroi latérale et le centre de la section est tel que : 10% ≤ H/Ht ≤ 100%.

- Avantageusement, le canal interne comporte une zone de détection et le capteur pour la mesure en temps réel de la concentration de particules dans l'air comporte :

  ◦ une source de lumière configurée pour émettre un rayonnement lumineux dans une direction de propagation, le rayonnement lumineux étant focalisé dans la zone de détection du canal interne ;
  ◦ un premier photodétecteur configuré pour capter un premier signal de diffusion émis par des particules traversant la zone de détection dans une première direction formant un premier angle non nul avec la direction de propagation du rayonnement lumineux ;
  ◦ un deuxième photodétecteur configuré pour capter un deuxième signal de diffusion émis par des particules traversant la zone de détection dans une deuxième direction formant un deuxième angle non nul avec la direction de propagation du rayonnement lumineux, le deuxième angle étant différent du premier angle et les premier et deuxième angles n'étant pas supplémentaires ;
  ◦ un piège de lumière configuré pour recevoir le rayonnement lumineux en sortie de la zone de détection de manière à empêcher un retour parasite du rayonnement lumineux vers la zone de détection.

On accède ainsi à une information de différence d'intensité lumineuse diffusée, entre le premier signal de diffusion émis dans la première direction et le deuxième signal de diffusion émis dans la deuxième direction, qui permet d'augmenter la précision sur l'information de granulométrie des particules qui traversent la zone de détection et donc d'augmenter la précision du capteur selon un aspect de l'invention. En effet, deux particules de tailles différentes présentent chacune une diffusion angulaire distincte.

- La différence entre les premier et deuxième angles est d'au moins 5° et préférentiellement d'au moins 15°.

- La première direction et la direction de propagation définissant un premier plan, la deuxième direction appartient préférentiellement à un deuxième plan distinct du premier plan, et préférentiellement perpendiculaire au premier plan.

- Le piège de lumière comporte une paroi noire et une cavité noire, la paroi déviant le rayonnement lumineux vers la cavité. La paroi est préférentiellement lisse tandis que la cavité est rugueuse.

- Avantageusement, le canal interne comporte une zone de détection et le capteur comporte en outre un dispositif de chauffage d'un flux d'air circulant dans le canal interne, le dispositif de chauffage comportant au moins un élément chauffant par effet Joule agencé sur une paroi du canal interne en amont de la zone de détection.
On permet ainsi un contrôle de l'hygrométrie des particules du flux d'air afin de s'affranchir des conditions atmosphériques extérieures. En effet, certains types de particules gonflent significativement sous l'effet de l'humidité, ce qui est susceptible, en modifiant la taille des particules, de fausser les mesures. En maîtrisant l'hygrométrie du flux d'air, on améliore donc la précision du capteur selon un aspect de l'invention.

- Le dispositif de chauffage comporte préférentiellement une pluralité d'éléments chauffants par effet Joule en série.

- Le dispositif de chauffage comporte préférentiellement des moyens de contrôle du au moins un élément chauffant par effet Joule en fonction d'une première mesure de température et d'une deuxième mesure d'humidité.

- Le au moins un élément chauffant par effet Joule est préférentiellement une résistance ou alternativement un régulateur linéaire.

L'invention et ses différentes applications seront mieux comprises à la lecture de la description qui suit et à l'examen des figures qui l'accompagnent.

## BREVE DESCRIPTION DES FIGURES

Les figures sont présentées à titre indicatif et nullement limitatif de l'invention.

- La figure 1 montre schématiquement une vue en perspective d'un capteur pour la mesure en temps réel de la concentration de particules dans l'air selon un aspect de l'invention.
- La figure 2a montre schématiquement une vue d'un canal interne du capteur de la figure 1 selon un plan de coupe d'axes $\vec{y}$, $\vec{z}$.
- La figure 2b montre schématiquement une vue partielle du canal interne du capteur de la figure 1 selon le plan de coupe d'axes $\vec{y}$, $\vec{z}$.
- La figure 2c montre schématiquement une vue partielle d'un capteur selon un aspect de l'invention comportant une pièce d'adaptation.
- La figure 3a montre schématiquement une vue du canal interne du capteur de la figure 1 selon un plan de coupe d'axes $\vec{x}$, $\vec{y}$, selon un premier mode de réalisation.
- La figure 3b montre schématiquement une vue partielle du canal interne du capteur de la figure 1 selon un plan de coupe d'axes $\vec{x}$, $\vec{z}$.
- La figure 3c montre schématiquement une vue d'un canal interne d'un capteur selon un plan de coupe d'axes $\vec{x}$, $\vec{y}$, selon un deuxième mode de réalisation.
- La figure 3d1 montre schématiquement un premier exemple d'élément de laminarisation au sein d'un canal interne d'un capteur selon l'un quelconque des modes de réalisation de l'invention.

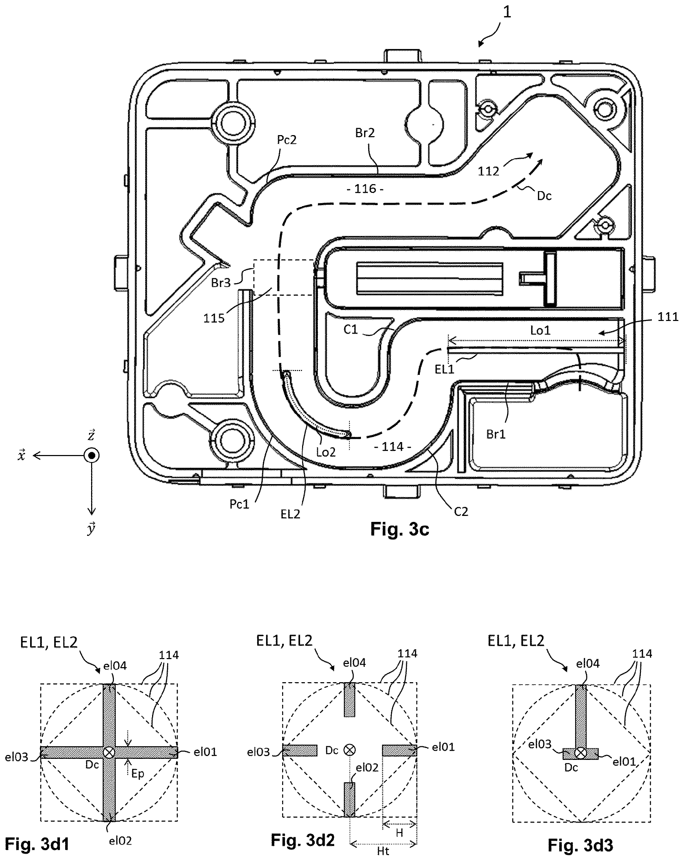

- La figure 3d2 montre schématiquement un deuxième exemple d'élément de laminarisation au sein d'un canal interne d'un capteur selon l'un quelconque des modes de réalisation de l'invention.

- La figure 3d3 montre schématiquement un troisième exemple d'élément de laminarisation au sein d'un canal interne d'un capteur selon l'un quelconque des modes de réalisation de l'invention.

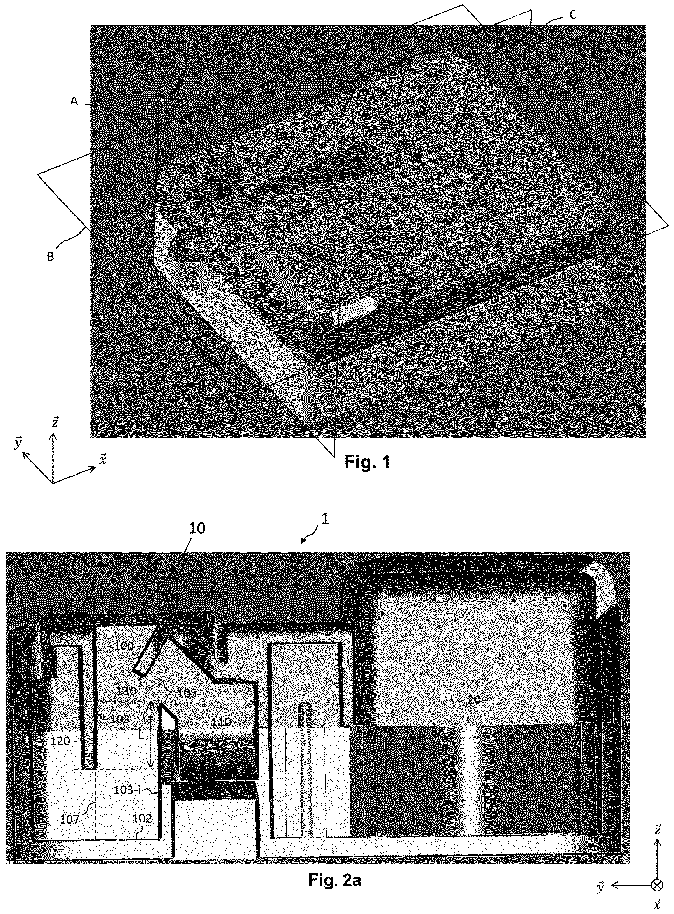

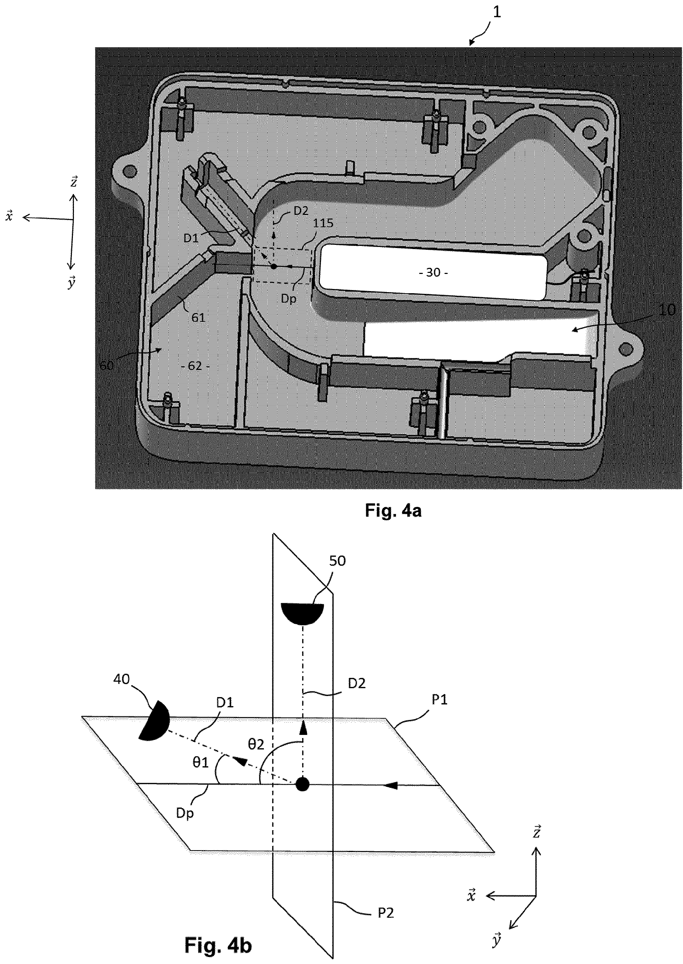

- La figure 4a montre schématiquement une vue d'un système de détection optique du capteur de la figure 1 selon un plan de coupe d'axes $\vec{x}$, $\vec{y}$.
- La figure 4b montre schématiquement une vue partielle en perspective du système de détection optique du capteur de la figure 1.

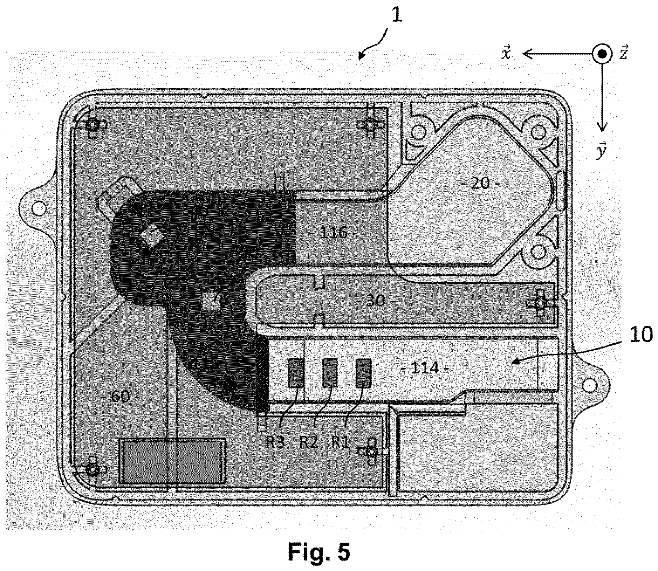

- La figure 5 montre schématiquement une vue d'un dispositif de chauffage du capteur de la figure 1 selon un plan de coupe d'axes $\vec{x}$, $\vec{y}$.

## DESCRIPTION DETAILLEE D'AU MOINS UN MODE DE REALISATION DE L'INVENTION

Sauf précision contraire, un même élément apparaissant sur des figures différentes présente une référence unique.

Les figures sont définies dans un repère orthogonal d'axes $\vec{x}, \vec{y}, \vec{z}$.

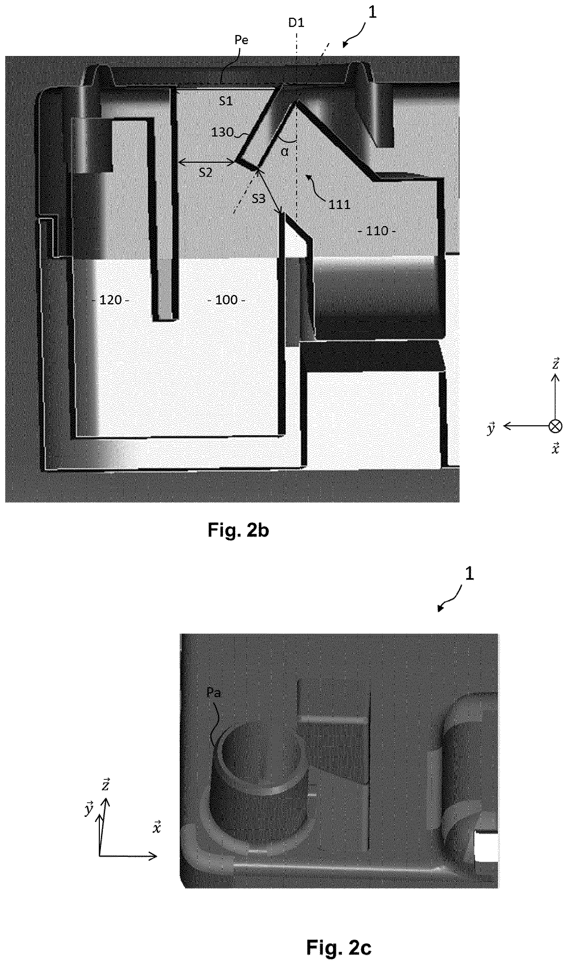

La figure 1 montre schématiquement une vue en perspective d'un capteur 1 pour la mesure en temps réel de la concentration de particules dans l'air selon un mode de réalisation de l'invention. La figure 1 montre un plan de coupe A d'axes $\vec{y}$, $\vec{z}$, un plan de coupe B d'axes $\vec{x}$, $\vec{y}$ et un plan de coupe C d'axes $\vec{x}$, $\vec{z}$. Le capteur 1 comporte un canal interne 10 (référencé à la figure 2a) ayant une première portion 100 et une deuxième portion 110 (référencées à la figure 2b), la première portion ayant une première extrémité ouverte 101 formant une entrée d'un flux d'air dans le canal interne du capteur 1, et la deuxième portion ayant une deuxième extrémité ouverte 112 formant une sortie du flux d'air du canal interne du capteur 1. L'entrée d'air 101 et la sortie d'air 112 s'étendent préférentiellement selon deux plans distincts, et encore plus préférentiellement selon deux plans qui ne sont pas parallèles entre eux, afin que le flux d'air en entrée ne soit pas perturbé par le flux d'air en sortie. Dans l'exemple particulier illustré à la figure 1, l'entrée d'air 101 s'étend suivant un plan sensiblement parallèle plan de coupe B, tandis que la sortie d'air 112 s'étend suivant un plan sensiblement parallèle au plan de coupe C.

La figure 2a montre schématiquement une vue selon le plan de coupe A du canal interne 10 du capteur 1. La figure 2b montre schématiquement une vue partielle selon le plan de coupe A du canal interne 10 du capteur 1. Les figures 2a et 2b illustrent particulièrement une fonction de filtre fluidique du capteur 1 et sont décrites conjointement.

Le capteur 1 comporte un canal interne 10 ayant :

- la première portion 100 comportant une paroi latérale 103 s'étendant entre la première extrémité ouverte 101 et une deuxième extrémité fermée 102, la première extrémité ouverte 101 s'étendant suivant un plan d'entrée Pe ;
- la deuxième portion 110 communiquant avec la première portion 100 via une première ouverture 105 dans la paroi latérale 103 de la première portion 100, la première ouverture 105 étant adjacente à la première extrémité ouverte 101 ;
- une zone de stockage 120 communiquant avec la première portion 100 via une deuxième ouverture 107 dans la paroi latérale 103 de la première portion 100, la deuxième ouverture étant adjacente à la deuxième extrémité fermée 102, les première et deuxième ouvertures 105, 107 étant agencées de part et d'autre de la paroi latérale 103 ;
- une plaque de déflexion 130 fixée à une jonction entre la première extrémité ouverte 101 de la première portion 100 et la deuxième portion 110, la plaque de déflexion 130 s'étendant à l'intérieur de la première portion 100 et formant avec une première direction D1 normale au plan d'entrée Pe un angle $\alpha$ tel que :
  $$0° < a < 90°$$

la plaque de déflexion 130, la première portion 100 et les première et deuxième ouvertures 105, 107 étant dimensionnées de manière que dans un flux d'air entrant dans le capteur 1 par la première extrémité ouverte 101 et comportant des premières particules de diamètre inférieur ou égal à 10 $\mu$m et des deuxièmes particules de diamètre supérieur à 10 $\mu$m, les premières particules passent par la première ouverture 105 et parviennent dans la deuxième portion 110 du canal interne tandis que les deuxièmes particules passent par la deuxième ouverture 107 et parviennent dans la zone de stockage 120.

Les première et deuxième ouvertures 105, 107, agencées de part et d'autre de la paroi latérale 103, ne sont pas en vis-à-vis l'une de l'autre, c'est-à-dire que tout plan d'axes $\vec{x}$, $\vec{y}$ et passant par la première ouverture 105 ne passe pas par la deuxième ouverture 107, et vice versa. Il existe préférentiellement une portion de paroi latérale 103 d'une longueur L au moins égale à 2 mm entre les première et deuxième ouvertures 105, 107. On entend par « les première et deuxième ouvertures 105, 107 sont agencées de part et d'autre de la paroi latérale 103 » le fait que :

- la première ouverture 105 se trouve dans un premier demi-espace, auquel appartiennent la plaque de déflexion 130 et la deuxième portion 110 du canal interne, et
- la deuxième ouverture 107 se trouve dans un deuxième demi-espace, auquel appartient la zone de stockage 120.

Une partie de la paroi latérale 103 est une plaque d'impaction 103-i : il s'agit de la partie de la paroi latérale 103 qui est agencée du côté de la première ouverture 105, dans le premier demi-espace. La plaque d'impaction 103-i est agencée du côté de la première ouverture 105.

Dans l'exemple particulier qui est illustré sur les figures 2a et 2b, la première portion 100 est rectiligne suivant la première direction D1. Toutefois, la première portion 100 peut alternativement être courbée.

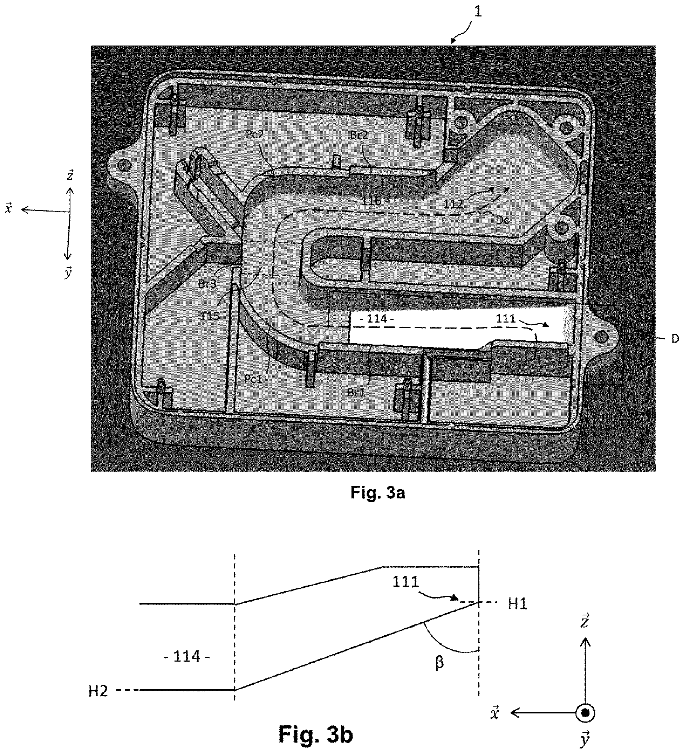

Dans l'exemple particulier qui est illustré sur les figures 1, 2a et 2b, la première portion 100 et la deuxième portion 110 sont de section rectangulaire. Toutefois, la première portion 100 et/ou la deuxième portion 110 peuvent alternativement être de section carrée, polygonale, circulaire, elliptique... La première portion 100 et la deuxième portion 110 peuvent présenter toutes les deux une même géométrie de section, par exemple être toutes les deux de section circulaire, ou bien présenter chacune une géométrie de section distincte, par exemple section circulaire pour la première portion 100, et section rectangulaire ou carrée pour la deuxième portion 110. D'une manière générale, on entend par « section d'une portion » une section normale à une direction Dc (représentée par exemple sur les figures 3a et 3c) suivant laquelle s'étend la portion du canal interne en chaque point et selon laquelle un flux d'air est amené à circuler. Dans l'exemple particulier où la première portion 100 est rectiligne suivant la première direction D1, chaque section de la première portion 100 est suivant un plan parallèle au plan B d'axes $\vec{x}, \vec{y}$. D'une manière générale, on souhaite définir une certaine vitesse du flux d'air à travers le canal interne 10. Pour ce faire, le paramètre déterminant est la surface de la section de chacune des première et deuxième portions 100, 110. On comprend que plusieurs géométries différentes peuvent être associées à une même surface.

De manière avantageuse, la première portion 100 est de section circulaire et le capteur 1 comporte une pièce d'adaptation Pa intégrée, faisant saillie du capteur 1 au niveau de la première extrémité ouverte 101 de la première portion 100, de manière à offrir un prolongement de la première portion 100. Cette configuration est illustrée à la figure 2c. La pièce d'adaptation Pa présente une forme de cylindre creux, de section circulaire de même diamètre ou de diamètre différent par rapport à la section circulaire de la première portion 100. La pièce d'adaptation Pa est monobloc avec le capteur 1 ; la pièce d'adaptation Pa peut notamment être moulée avec le capteur 1. La pièce d'adaptation Pa permet de recevoir un tube.

Des première, deuxième et troisième surfaces S1, S2, S3 d'écoulement sont représentées sur la figure 2b :

- la première surface S1 est la surface d'entrée du canal interne 10, c'est-à-dire la surface d'écoulement suivant le plan d'entrée Pe de la première extrémité ouverte 101 de la première portion 100 du canal interne 10 ;
- la deuxième surface S2 est la plus petite surface d'écoulement de la première portion 100, définie entre l'extrémité de la plaque de déflexion 130 et la paroi latérale 103 ;
- la troisième surface S3 est la plus petite surface d'écoulement définie entre l'extrémité de la plaque de déflexion 130 et l'extrémité de la plaque d'impaction 103-i délimitant la première ouverture 105.

Le rapport S2/S1 de la deuxième surface S2 sur la première surface S1 est avantageusement tel que :

$$10\% \leq \frac{S2}{S1} \leq 90\%$$

Préférentiellement tel que :

$$30\% \leq \frac{S2}{S1} \leq 90\%$$

Et encore plus préférentiellement tel que :

$$30\% \leq \frac{S2}{S1} \leq 75\%$$

On optimise ainsi la fonction de filtre en entrée du canal interne 10 du capteur 1.

Selon un exemple particulier, la première surface S1 présente une surface de 50 mm$^2$ et la deuxième surface S2 présente une surface de 30 mm$^2$, soit un rapport S2/S1 de 60%.

Le diamètre de coupure d, c'est-à-dire le diamètre aérodynamique tel que 50% des particules de ce diamètre parviennent dans la deuxième portion 110 du canal interne et 50% n'y parviennent pas, peut être estimé par la formule suivante :

$$d \propto k \frac{u}{l\alpha\rho}$$

où d est exprimé en $\mu$m ; k est une constante exprimée en $\mu$m.s.rad ; u est la vitesse du flux d'air passant par la troisième surface S3 ; l est la longueur de la plaque de déflexion 130 exprimée en m ; $\alpha$ est l'angle exprimé en rad que forme la plaque de déflexion 130 avec la première direction D1 ; $\rho$ est la densité des particules considérées :

$$\rho = \frac{masse\ volumique\ des\ particules\ consid\acute{e}r\acute{e}es}{masse\ volumique\ de\ r\acute{e}f\acute{e}rence}$$

La masse volumique de référence est de 1g/cm$^3$.

L'angle $\alpha$, illustré en particulier à la figure 2b, est préférentiellement tel que :

$15° \le \alpha \le 75°$

L'angle $\alpha$ est plus préférentiellement tel que :

$15° \le \alpha \le 45°$

L'angle $\alpha$ est encore plus préférentiellement tel que :

$25° \le \alpha \le 35°$

Pour un angle $\alpha$ de 30°, une plaque de déflexion 130 de longueur l = 4 mm et une vitesse u du flux d'air passant par la troisième surface S3 de 5 m/s :

- un diamètre de coupure d supérieur à 10 $\mu$m est obtenu pour des particules de densité $\rho$ = 1 ;
- un diamètre de coupure d supérieur à 3 $\mu$m est obtenu pour des particules de densité $\rho$ = 3.

Plus le diamètre de coupure d est petit, plus le diamètre des particules qui parviennent effectivement dans la deuxième portion 110 est faible. On observe que la masse volumique des particules a une influence importante sur les résultats.

La zone de stockage 120 présente avantageusement un volume compris entre 0,5 mL et 5 mL. Cela permet de garantir une durée de vie sans maintenance du capteur 1 suffisante, c'est-à-dire supérieure à 10000 heures dans des environnements très pollués en particules fines. On considère qu'un environnement est très pollué en particules fines lorsqu'il comporte en moyenne au moins 250 $\mu$g/m$^3$ de particules fines. Dans le même temps, le volume cumulé de la première portion 100 du canal interne et de la zone de stockage 120 est avantageusement inférieur à 10 mL. Cela permet de limiter la taille du capteur 1, et donc son encombrement et sa masse.

La figure 3a montre schématiquement une vue selon le plan de coupe B du capteur 1 selon un premier mode de réalisation. La figure 3a montre un plan de coupe D d'axes $\vec{x}$, $\vec{z}$. La figure 3b montre schématiquement une vue partielle selon le plan de coupe D du capteur 1. La figure 3b montre schématiquement une vue selon le plan de coupe B du capteur 1 selon un deuxième mode de réalisation. Les figures 3a, 3b et 3c sont décrites conjointement.

La deuxième portion 110 du canal interne présente une première extrémité 111 ouverte qui communique avec la première portion 100 du canal interne, et la deuxième extrémité 112 ouverte. La deuxième portion 110 du canal interne comporte une zone de détection 115, une zone amont 114 entre la première extrémité 111 et la zone de détection 115, et une zone aval 116 entre la zone de détection 115 et la deuxième extrémité 112.

Afin d'améliorer la compacité du capteur 1, la deuxième portion 110 du canal interne présente avantageusement une forme repliée, avec une première branche rectiligne Br1 reliée à une deuxième branche rectiligne Br2 par une liaison sensiblement perpendiculaire aux première et deuxième branches rectilignes Br1, Br2. Les première et deuxième branches rectilignes Br1, Br2 peuvent être parallèles entre elles mais ne sont pas nécessairement parallèles entre elles. La zone amont 114 comporte la première branche rectiligne Br1, la zone aval 116 comporte la deuxième branche rectiligne Br2 et la zone de détection 115 se trouve dans la liaison entre les première et deuxième branches rectilignes Br1, Br2. Un autre avantage de la forme repliée est d'éloigner la zone de détection 115 de l'entrée 101 et de la sortie 112 du canal interne afin de limiter le risque de lumière parasite extérieure dans la zone de détection 115. La forme repliée illustrée à la figure 3a peut également être décrite comme comportant la première branche rectiligne Br1, la deuxième branche rectiligne Br2 et une troisième branche rectiligne Br3 sensiblement perpendiculaire aux première et deuxième branches rectilignes Br1, Br2, la troisième branche rectiligne Br3 étant reliée à la première branche rectiligne Br1 par une première portion coudée Pc1 et à la deuxième branche rectiligne Br2 par une deuxième portion coudée Pc2. La liaison précédemment définie entre les première et deuxième branches rectilignes Br1, Br2 comporte la troisième branche rectiligne Br3 et les première et deuxième portions coudées Pc1, Pc2. La zone amont 114 comporte la première branche rectiligne Br1 et la première portion coudée Pc1, la zone aval 116 comporte la deuxième portion coudée Pc2 et la deuxième branche rectiligne Br2, et la zone de détection 115 se trouve dans la troisième portion rectiligne Br3.

La zone amont 114 peut en outre comporter au moins une portion présentant une forme en S avec un premier coude C1 et un deuxième coude C2, ainsi qu'illustré à la figure 3c. Dans ce cas, la première branche rectiligne Br1 peut se trouver en amont ou en aval des premier et deuxième coudes C1, C2.

Dans le même temps, la géométrie et le dimensionnement de la zone amont 114 sont avantageusement choisis de manière qu'un flux d'air perturbé par la première portion 100 du canal interne et entrant dans la deuxième portion 110 du canal interne soit laminaire et avec une vitesse homogène lorsqu'il parvient au niveau de la zone de détection 115. On considère que le flux d'air présente une vitesse homogène dans la zone de détection 115 lorsqu'en chaque point d'une section de la zone de détection, la vitesse v selon l'axe $\vec{y}$ perpendiculaire à ladite section est telle que :

$$0,8 \times v_m \leq v \leq 1,2 \times v_m$$

avec $v_m$ la vitesse moyenne dans ladite section.

Pour ce faire, la zone amont 114 du canal interne présente une portion inclinée s'élargissant en reliant un premier plan horizontal H1, suivant lequel s'étend sensiblement la première extrémité 111 du canal interne, à un deuxième plan horizontal H2, suivant lequel s'étend sensiblement le canal interne entre sa zone de détection 115 et sa deuxième extrémité 112. L'inclinaison β de cette portion, mesurée par rapport à la verticale, est telle que :

$$60° \leq \beta \leq 80°$$

L'élargissement de la portion inclinée de la zone amont 114 du canal interne est compris entre 150 et 300 $\mu m^2$ par mm de longueur suivant l'axe $\vec{x}$. La portion inclinée qui vient d'être décrite est illustrée en particulier en lien avec le premier mode de réalisation de la figure 3a mais elle est également compatible avec le deuxième mode de réalisation de la figure 3c.

La zone amont 114 du canal interne peut également présenter un élément de laminarisation, faisant saillie d'au moins une paroi latérale de la deuxième portion 110 et s'étendant suivant la direction Dc selon laquelle s'étend le canal interne 10 en chaque point et selon laquelle un flux d'air est amené à circuler. L'élément de laminarisation est donc rectiligne s'il se trouve dans une partie rectiligne de la deuxième portion 110, courbe s'il se trouve dans une partie coudée de la deuxième portion. L'élément de laminarisation peut être d'un seul tenant ou comporter plusieurs parties distinctes : ainsi dans l'exemple de la figure 3c, l'élément de laminarisation comporte un premier sous-élément EL1 rectiligne dans la première branche rectiligne Br1 et un deuxième sous-élément EL2 courbe dans la première portion coudée Pc1. La longueur de l'élément de laminarisation, ou la longueur cumulée des sous-éléments de l'élément de laminarisation mesurée suivant la direction Dc, peut varier entre 0,1% et 100%, préférentiellement entre 10% et 60% de la longueur de la zone amont 114 mesurée suivant la direction Dc. Sur la figure 3c, la longueur du premier sous-élément EL1 est référencée « Lo1 » et la longueur du deuxième sous-élément EL2 est référencée « Lo2 ». Dans la suite, on entendra par « élément de laminarisation » l'élément de laminarisation ou chacun de ses sous-éléments. L'élément de laminarisation est illustré en particulier en lien avec le deuxième mode de réalisation de la figure 3c mais il est également compatible avec le premier mode de réalisation de la figure 3a.

Les figures 3d1, 3d2 et 3d3 montrent respectivement des premier, deuxième et troisième exemples d'éléments de laminarisation, représentés avec des hachures. Chacune des figures 3d1, 3d2 et 3d3 est une vue en coupe de la zone amont 114, selon un plan normal à la direction Dc. Différentes géométries de section possibles de la deuxième portion 110 sont représentées en pointillés.

D'une manière générale, l'élément de laminarisation comporte au moins une plaque faisant saillie de la paroi latérale représentée en pointillés et orientée radialement par rapport à la direction Dc (qui correspond à la direction normale au plan de la feuille et passant par le centre de chaque géométrie de section), ladite au moins une plaque présentant une hauteur H (référencée à la figure 3d2) mesurée radialement par rapport à la direction Dc et dont le rapport sur la hauteur « totale » Ht (référencée à la figure 3d2) entre la paroi latérale et le centre de la section est tel que : 10% $\leq$ H/Ht $\leq$ 100%. Chaque plaque de l'élément de laminarisation présente une épaisseur Ep (référencée à la figure 3d1), mesurée en chaque point perpendiculairement à la direction Dc et à la direction radiale, telle que : 0,1 mm $\leq$ Ep $\leq$ 2 mm et plus préférentiellement telle que : 0,5 mm $\leq$ Ep $\leq$ 1 mm.

Selon l'exemple de la figure 3d1, l'élément de laminarisation comporte des première, deuxième, troisième et quatrième plaques el01, el02, el03, el04 selon la définition ci-dessus, plus particulièrement toutes de même hauteur H telle que H = Ht de manière qu'elles se rejoignent au centre de la section. Selon le premier exemple, l'élément de laminarisation présente donc un profil cruciforme.

Selon l'exemple de la figure 3d2, les première, deuxième, troisième et quatrième plaques el01, el02, el03, el04 sont toutes de même hauteur H telle que H < Ht, de manière qu'elles ne se rejoignent pas au centre de la section. Alternativement et conformément à la définition donnée en premier lieu, l'élément de laminarisation peut comporter seulement une, deux ou trois plaques parmi quatre - selon toutes les combinaisons possibles : première plaque ; première et deuxième plaques ; première et troisième plaques : première et quatrième plaques ; première, deuxième et troisième plaques ; etc. Par ailleurs :

- lorsque l'élément de laminarisation comporte plusieurs plaques, elles peuvent être de même hauteur ou de hauteurs différentes. Toutes les plaques peuvent se rejoindre (comme dans l'exemple de la Fig. 3d1), ou seulement une partie, ou aucune (comme dans l'exemple de la Fig. 3d2).

- Lorsque l'élément de laminarisation comporte plusieurs sous-éléments, ils peuvent être de géométrie et/ou de dimensions différentes. Ainsi, dans l'exemple de la figure 3c, le premier sous-élément EL1 comporte une unique plaque faisant saillie de la paroi latérale suivant la direction $\vec{z}$ et de hauteur H telle que H/Ht = 20% ; tandis que le deuxième sous-élément EL2 comporte également une unique plaque faisant saillie de la paroi latérale suivant la direction $\vec{z}$ mais cette fois de hauteur H telle que H/Ht = 35%.

Selon l'exemple de la figure 3d3, l'élément de laminarisation comporte la quatrième plaque el04 de hauteur H = Ht, qui fait saillie de la paroi latérale et atteint le centre de la section, et les première et troisième plaques el01, el03 de hauteur H < Ht, les première et troisième plaques el01, el03 ne faisant pas saillie de la paroi latérale mais de l'extrémité de la quatrième plaque el04 au centre de la section, de manière que l'élément de laminarisation présente un profil en « T ».

Le capteur 1 comporte préférentiellement un dispositif 20 de mise en circulation d'un flux d'air dans le canal interne 10, référencé à la figure 2a, qui est agencé à la deuxième extrémité 112 de la deuxième portion 110 du canal interne et qui est configuré pour faire circuler un flux d'air depuis la première extrémité 101 de la première portion 100 du canal interne vers la deuxième extrémité 112 de la deuxième portion 110 du canal interne. Le dispositif 20 peut avantageusement être asservi afin d'assurer une vitesse moyenne constante du flux d'air au niveau de la zone de détection 115. Dans un exemple de réalisation de l'invention, le flux d'air à travers le canal interne 10 du capteur 1 présente un débit de 0,0032 m$^3$/min et la perte de charge générée par le canal interne 10 est calculée à 9,6 Pa : dans cet exemple de réalisation, le dispositif 20 est avantageusement asservi afin d'assurer une vitesse moyenne de 1 m/s au niveau de la zone de détection 115. Le dispositif 20 peut notamment être un ventilateur, une pompe ou micro-pompe.

La figure 4a montre schématiquement une vue d'un système de détection optique du capteur 1 selon le plan de coupe B d'axes $\vec{x},\vec{y}$. La figure 4b montre schématiquement une vue partielle en perspective du système de détection optique du capteur 1. Les figures 4a et 4b illustrent particulièrement une fonction de détecteur optique du capteur 1 et sont décrites conjointement. La fonction de détecteur optique est compatible de tous les modes et caractéristiques précédemment décrits en lien avec la circulation fluidique, et notamment avec les modes de réalisation décrits en lien avec les figures 3a, 3b, 3c, 3d1, 3d2, 3d3.

Le système de détection optique du capteur 1 comporte :

- une source de lumière 30 configurée pour émettre un rayonnement lumineux dans une direction de propagation Dp, le rayonnement lumineux étant focalisé dans la zone de détection 115 du canal interne 10 ;
- un premier photodétecteur 40 configuré pour capter un premier signal de diffusion émis dans une première direction D1 par des particules traversant la zone de détection, la première direction D1 formant un premier angle θ1 non nul avec la direction de propagation Dp du rayonnement lumineux ;
- un deuxième photodétecteur 50 configuré pour capter un deuxième signal de diffusion émis dans une deuxième direction D2 par des particules traversant la zone de détection, la deuxième direction D2 formant un deuxième angle θ2 non nul avec la direction de propagation Dp du rayonnement lumineux, le deuxième angle θ2 étant différent du premier angle θ1 et les premier et deuxième angles θ1, θ2 n'étant pas supplémentaires ;
- un piège de lumière 60 configuré pour recevoir le rayonnement lumineux en sortie de la zone de détection 115 de manière à empêcher un retour parasite du rayonnement lumineux vers la zone de détection 115.

On accède ainsi à une information de différence d'intensité lumineuse diffusée, entre le premier signal de diffusion émis dans la première direction et le deuxième signal de diffusion émis dans la deuxième direction, qui permet d'augmenter la précision sur l'information de granulométrie des particules qui traversent la zone de détection et donc d'augmenter la précision du capteur 1. En effet, deux particules de tailles différentes présentent chacune une diffusion angulaire distincte.

La source de lumière 30 est préférentiellement une source laser, et en particulier une source laser de type diode laser. Alternativement, la source de lumière 30 peut être une diode électroluminescente, ou LED. La focalisation du rayonnement lumineux dans la zone de détection est obtenue par une optique de focalisation. Le rayonnement lumineux émis par la source de lumière 30 présente préférentiellement une puissance comprise entre 1 mW et 20 mW, plus préférentiellement une puissance comprise entre 1 mW et 10 mW, encore plus préférentiellement une puissance comprise entre 1 mW et 5 mW. Le rayonnement lumineux émis par la source de lumière 30 présente par exemple un rayonnement lumineux de 2 mW. La source de lumière 30 peut émettre un rayonnement lumineux visible, c'est-à-dire de longueur d'onde comprise dans l'intervalle [400 nm ; 700 nm], ou bien un rayonnement proche infrarouge, c'est-à-dire de longueur d'onde comprise dans l'intervalle [700 nm ; 900 nm]. Pour augmenter les performances métrologiques du capteur conformément à la théorie de Mie, un rayonnement lumineux visible de faible longueur d'onde, c'est-à-dire de longueur d'onde comprise dans l'intervalle [400 nm ; 500 nm], est plus performant. Toutefois, un bon compromis performance-coût est en particulier obtenu avec un rayonnement visible de longueur d'onde comprise dans l'intervalle [600 nm ; 700 nm], et plus particulièrement de longueur d'onde comprise dans l'intervalle [630 nm ; 670 nm].

Les premier et deuxième photodétecteurs 40, 50 sont préférentiellement des photodiodes. Alternativement, les premier et deuxième photodétecteurs 40, 50 pourraient être des photomultiplicateurs. Par rapport aux photomultiplicateurs, les photodiodes présentent l'avantage d'être moins coûteuses et plus simples à mettre en œuvre dans des systèmes miniatures. Chacun des premier et deuxième photodétecteurs 40, 50 présente une surface active et un cône de détection d'axe normal à sa surface active.

Le piège de lumière 60 comporte une paroi 61 et une cavité 62, la paroi 61 étant orientée, par rapport à la direction de propagation Dp, de manière à dévier le rayonnement lumineux vers la cavité 62. La paroi 61 et la cavité 62 sont avantageusement noires de manière à maximiser une absorption d'un rayonnement lumineux incident. De manière avantageuse, la paroi 61 est lisse tandis que la cavité 62 est rugueuse. On entend par « surface lisse » une surface ayant un écart moyen de rugosité Ra tel que :

$Ra < 0,1 \, \mu m$

On entend par « surface rugueuse » une surface ayant un écart moyen de rugosité Ra tel que :

$Ra > 10 \, \mu m$

L'écart moyen de rugosité Ra est l'écart-type des aspérités de la surface considérée, tel que défini dans la norme ISO 4287.

On choisit préférentiellement la différence $\Delta\theta$ entre les premier et deuxième angles $\theta 1$, $\theta 2$ de manière que :

$$\Delta\theta > k \frac{d\lambda S}{P}$$

où :

- k est une constante exprimée en $rad/W/m^{-4}$ ;
- d est la distance entre chacun des premier et deuxième photodétecteurs 40, 50 d'une part, et la zone de détection 115 d'autre part, exprimée en m ; si les premier et deuxième photodétecteurs 40, 50 ne sont pas équidistants de la zone de détection 115, d est la plus petite distance entre chacun des premier et deuxième photodétecteurs 40, 50 d'une part et la zone de détection 115 ;
- $\lambda$ est la longueur d'onde du rayonnement lumineux, exprimée en m ;
- S est la surface active des premier et deuxième photodétecteurs, exprimée en $m^2$ ; si les premier et deuxième photodétecteurs n'ont pas la même surface active, S est la plus grande surface active des premier et deuxième photodétecteurs ;
- P est la puissance de la source lumineuse, exprimée en W.

Pour une configuration donnée des premier et deuxième photodétecteurs par rapport à la zone de détection et pour une longueur d'onde donnée du rayonnement lumineux, plus la puissance de la source lumineuse est grande, plus la différence $\Delta\theta$ entre les premier et deuxième angles $\theta 1$, $\theta 2$ peut être faible. D'une manière générale, on choisit une différence $\Delta\theta$ d'au moins 5° et préférentiellement d'au moins 15° entre les premier et deuxième angles $\theta 1$, $\theta 2$.

Dans l'exemple particulier de la figure 4c, le premier angle $\theta 1$ entre la direction de propagation Dp et la première direction D1 est tel que :

$\theta 1 = 45°$

et le deuxième angle $\theta 2$ entre la direction de propagation Dp et la deuxième direction D2 est tel que :

$\theta 2 = 90°$

La différence $\Delta\theta$ entre les premier et deuxième angles $\theta 1$, $\theta 2$ est donc de 45°.

Par ailleurs, on choisit préférentiellement les première et deuxième directions D1, D2 de manière que :

- la première direction D1 et la direction de propagation Dp définissent un premier plan P1, et
- la deuxième direction D2 appartient à un deuxième plan P2 distinct du premier plan P1.

Dans l'exemple particulier de la figure 4c, le deuxième plan P2 est perpendiculaire au premier plan P1.

Toujours dans l'exemple particulier de la figure 4c, l'axe du cône de détection du premier photodétecteur 40 est confondu avec la première direction D1, et l'axe du cône de détection du deuxième photodétecteur 50 est confondu avec la deuxième direction D2. Toutefois, le premier photodétecteur 40 pourrait alternativement être agencé de manière que l'axe de son cône de détection ne soit pas confondu avec la première direction D1, par exemple en utilisant un miroir pour dévier le premier signal de diffusion dans une direction D1' et en agençant le premier photodétecteur 40 de manière que son cône de détection soit confondu avec la direction déviée D1'. De même, le deuxième photodétecteur 50 pourrait alternativement être agencé de manière que l'axe de son cône de détection ne soit pas confondu avec la première direction D2, par exemple en utilisant un miroir pour dévier le deuxième signal de diffusion dans une direction D2' et en agençant le deuxième photodétecteur 50 de manière que son cône de détection soit confondu avec la direction déviée D2'.

La figure 5 montre schématiquement une vue en coupe, selon le plan B d'axes $\vec{x}, \vec{y}$, d'un dispositif de chauffage du flux d'air circulant dans le canal interne 10 du capteur 1, le dispositif de chauffage comportant au moins un élément chauffant par effet Joule agencé sur une paroi du canal interne 10, en amont 114 de la zone de détection 115. La figure 5 illustre particulièrement une fonction de contrôle thermique de l'hygrométrie du flux d'air circulant dans le canal interne 10 du capteur 1. La fonction de contrôle thermique est compatible de tous les modes et caractéristiques précédemment décrits en lien avec la détection optique et la circulation fluidique et notamment avec les modes de réalisation décrits en lien avec les figures 3a, 3b, 3c, 3d1, 3d2, 3d3.

Le dispositif de chauffage permet avantageusement un contrôle de l'hygrométrie des particules du flux d'air afin de s'affranchir des conditions atmosphériques extérieures. En effet, certains types de particules gonflent significativement sous l'effet de l'humidité, ce qui est susceptible, en modifiant la taille des particules, de fausser les mesures. En maîtrisant l'hygrométrie du flux d'air, on améliore donc la précision du capteur 1.

L'élément chauffant par effet Joule est préférentiellement une résistance ou alternativement un régulateur linéaire.

Le dispositif de chauffage comporte préférentiellement une pluralité d'éléments chauffants par effet Joule en série, ladite pluralité étant agencée sur une paroi du canal interne en amont de la zone de détection. Cela présente l'avantage d'utiliser une pluralité d'éléments chauffants de plus petites dimensions, plutôt qu'un unique élément chauffant de dimensions plus importantes, et donc de minimiser la perturbation mécanique du flux d'air au sein du canal interne 10. Dans l'exemple particulier de la figure 5, le dispositif de chauffage comporte des premier, deuxième et troisième éléments chauffants par effet Joule R1, R2, R3.

Grâce à le au moins un élément chauffant par effet Joule, la température du flux d'air parvenant dans la zone de détection est préférentiellement supérieure de 3°C à 10°C à la température du flux d'air entrant dans le capteur 1. Cette différence de température est suffisante pour garantir une absence de facteur de croissance des particules présentes dans le flux d'air (« growth factor » en anglais).

Le capteur 1 comporte préférentiellement un capteur de température et un capteur d'humidité et le au moins un élément chauffant par effet Joule est préférentiellement asservi en fonction d'une première mesure de température et d'une deuxième mesure d'humidité du flux d'air dans le capteur 1. La première mesure de température et la deuxième mesure d'humidité du flux d'air peuvent par exemple être réalisées en entrée ou en sortie du canal interne 10 capteur 1, ou en tout point intermédiaire du canal interne 10. On s'adapte ainsi aux conditions atmosphériques extérieures afin d'améliorer la précision du capteur tout en optimisant sa consommation énergétique.

Le capteur 1 selon un aspect de l'invention assure avantageusement à la fois les fonctions de filtre fluidique, de détecteur optique et de contrôle thermique précédemment décrites, mais le capteur 1 selon un aspect de l'invention peut alternativement n'assurer qu'une ou deux de ces trois fonctions, selon toutes les combinaisons possibles :

- fonction filtre fluidique seule,
- fonctions filtre fluidique et détecteur optique,
- fonctions filtre fluidique et contrôle thermique,
- fonction détecteur optique seule,
- fonctions détecteur optique et contrôle thermique,
- fonction contrôle thermique seule.

Le capteur 1 comporte préférentiellement un calculateur et une mémoire de stockage afin de réaliser tout ou partie des fonctions suivantes :

- contrôler la mise en circulation du flux d'air dans le capteur 1 par le dispositif 20 de mise en circulation, c'est-à-dire contrôler la vitesse et le débit du flux d'air dans le canal interne 10 du capteur 1 ;
- traiter les premier et deuxième signaux de diffusion issus des premier et deuxième photodétecteurs 40, 50 afin de calculer en temps réel une concentration en particules fines du flux d'air circulant dans le canal interne 10 du capteur 1 ;
- contrôler la au moins une résistance du dispositif de chauffage en fonction des mesures de température et d'humidité réalisées par les capteurs de température et d'humidité.

Le calculateur est par un exemple un microcontrôleur ou un microprocesseur. La mémoire de stockage est préférentiellement une mémoire morte reprogrammable EPROM (de l'anglais « Erasable Programmable Read Only Memory ») mais peut également être une mémoire vive RAM (de l'anglais « Random Access Memory »), une mémoire morte programmable PROM (de l'anglais « Programmable Read Only Memory »), une mémoire FLASH-EPROM ou tout autre puce ou cartouche mémoire.

**Revendications**

1. Capteur (1) pour la mesure en temps réel de la concentration de particules dans l'air comportant un canal interne (10) ayant :

   - une première portion (100) comportant une paroi latérale (103) s'étendant entre une première extrémité ouverte (101) et une deuxième extrémité fermée (102), la première extrémité ouverte (101) s'étendant suivant un plan d'entrée (Pe) ;
   - une deuxième portion (110) communiquant avec la première portion via une première ouverture (105) dans la paroi latérale (103) de la première portion (100), la première ouverture étant adjacente à la première extrémité ouverte ;
   - une zone de stockage (120) communiquant avec la première portion via une deuxième ouverture (107) dans la paroi latérale (103) de la première portion (100), la deuxième ouverture étant adjacente à la deuxième extrémité fermée, les première et deuxième ouvertures (105, 107) étant agencées de part et d'autre de la paroi latérale (103) ;
   - une plaque de déflexion (130) fixée à une jonction entre la première extrémité ouverte (101) de la première portion (100) et la deuxième portion (110), la plaque de déflexion (130) s'étendant à l'intérieur de la première portion (100) et formant avec une première direction (D1) normale au plan d'entrée (Pe) un angle $\alpha$ tel que : $0° < \alpha < 90°$

   la plaque de déflexion (130), la première portion (100) et les première et deuxième ouvertures (105, 107) étant dimensionnées de manière que dans un flux d'air entrant dans le capteur (1) par la première extrémité ouverte (101) et comportant des premières particules de diamètre inférieur ou égal à 10 $\mu$m et des deuxièmes particules de diamètre supérieur à 10 $\mu$m, les première particules sont déviées par la plaque de déflexion (130), passent par la première ouverture (105) et parviennent dans la deuxième portion (110) du canal interne (10) tandis que les deuxième particules sont déviées par la plaque de déflexion (130), impactées par une partie de la paroi latérale (103) formant une plaque d'impaction (103-i), passent par la deuxième ouverture (107) et parviennent dans la zone de stockage (120).

2. Capteur (1) selon la revendication précédente, dans lequel la deuxième portion (110) du canal interne (10) présente une première extrémité ouverte (111) communiquant avec la première portion du canal interne et une deuxième extrémité ouverte (112), **caractérisé en ce que** le capteur comporte un dispositif (20) de mise en circulation d'un flux d'air dans le canal interne, ledit dispositif (20) étant agencé à la deuxième extrémité (112) de la deuxième portion (110) du canal interne et étant configuré pour faire circuler un flux d'air depuis la première extrémité (101) de la première portion (100) du canal interne vers la deuxième extrémité (112) de la deuxième portion (110) du canal interne.

3. Capteur (1) selon la revendication précédente, **caractérisé en ce que** le dispositif (20) de mise en circulation d'un flux d'air dans le canal interne est un ventilateur ou une pompe.

4. Capteur (1) selon l'une quelconque des revendications précédentes dans lequel on définit une première surface (S1) d'écoulement qui est la surface suivant le plan d'entrée (Pe) de la première extrémité ouverte (101) et une deuxième surface (S2) d'écoulement qui est la plus petite surface d'écoulement de la première portion (100), définie entre l'extrémité de la plaque de déflexion (130) et la paroi latérale (103), le capteur (1) étant **caractérisé en ce que** le rapport S2/S1 de la deuxième surface (S2) sur la première surface (S1) est tel que :

$$10\% \leq \frac{S2}{S1} \leq 90\%$$

5. Capteur (1) selon l'une quelconque des revendications précédentes, dans lequel la deuxième portion (110) du canal interne présente une première extrémité ouverte (111) communiquant avec la première portion du canal interne et une deuxième extrémité ouverte (112), et la deuxième portion (110) du canal interne comporte une zone de détection (115), une zone amont (114) entre la première extrémité et la zone de détection et une zone aval (116) entre la zone de détection et la deuxième extrémité, le capteur (1) étant **caractérisé en ce que** :

   - la deuxième portion (110) du canal interne présente une forme repliée, et
   - la zone amont (114) du canal interne présente une portion inclinée s'élargissant entre la première extrémité (111) du canal interne et la zone de détection (115),

- la portion inclinée formant un angle β, mesuré par rapport à la verticale, tel que : 60° ≤ β ≤ 80°, et
- la portion inclinée s'élargissant de 150 μm² à 300 μm² par mm de longueur.

6. Capteur (1) selon l'une quelconque des revendications précédentes, **caractérisé en ce que** la zone de stockage (120) présente un volume compris entre 0,5 mL et 5 mL.

7. Capteur (1) selon l'une quelconque des revendications précédentes, **caractérisé en ce que** la première portion (100) du canal interne (10) est de section circulaire et **en ce que** le capteur (1) comporte une pièce d'adaptation (Pa) en forme de cylindre creux de section circulaire, la pièce d'adaptation (Pa) faisant saillie du capteur (1) au niveau de la première extrémité ouverte (101) de la première portion (100).

8. Capteur (1) selon l'une quelconque des revendications précédentes, **caractérisé en ce que** :

- la deuxième portion (110) présente une première extrémité (111) ouverte qui communique avec la première portion (100) et une deuxième extrémité ouverte (112) ; une zone de détection (115) ; une zone amont (114) entre la première extrémité (111) et la zone de détection (115); et une zone aval (116) entre la zone de détection (115) et la deuxième extrémité (112) ;
- la deuxième portion (110) présente une forme repliée avec une première branche rectiligne reliée à une deuxième branche rectiligne par une liaison sensiblement perpendiculaire aux première et deuxième branches rectilignes, de manière que la zone amont (114) comporte la première branche rectiligne, la zone aval (116) comporte la deuxième branche rectiligne et la zone de détection (115) se trouve dans la liaison entre les première et deuxième branches rectilignes.

9. Capteur (1) selon la revendication précédente, **caractérisé en ce que** la zone amont (114) comporte en outre au moins une portion présentant une forme en S avec des premier et deuxième coudes (C1, C2).

10. Capteur (1) selon l'une quelconque des revendications précédentes, dans lequel le canal interne s'étend en chaque point suivant une direction Dc et on entend par « section d'une portion du canal interne » une section normale à la direction Dc, **caractérisé en ce que** :

- la deuxième portion (110) présente une première extrémité (111) ouverte qui communique avec la première portion (100) et une deuxième extrémité ouverte (112) ; une zone de détection (115) ; une zone amont (114) entre la première extrémité (111) et la zone de détection (115); et une zone aval (116) entre la zone de détection (115) et la deuxième extrémité (112) ; et
- la zone amont (114) de la deuxième portion (110) comporte un élément de laminarisation (EL1, EL2), qui comporte au moins une plaque faisant saillie radialement d'une paroi latérale de la deuxième portion, ladite au moins une plaque présentant une hauteur H mesurée radialement et dont le rapport sur la hauteur totale Ht mesurée radialement entre la paroi latérale et le centre de la section est tel que : 10% ≤ H/Ht ≤ 100%.

11. Capteur (1) selon l'une quelconque des revendications précédentes, **caractérisé en ce que** le canal interne (10) comporte une zone de détection (115) et **en ce que** le capteur (1) comporte en outre :

- une source de lumière (30) configurée pour émettre un rayonnement lumineux dans une direction de propagation (Dp), le rayonnement lumineux étant focalisé dans la zone de détection (115) du canal interne ;
- un premier photodétecteur (40) configuré pour capter un premier signal de diffusion émis par des particules traversant la zone de détection (115) dans une première direction (D1) formant un premier angle (θ1) non nul avec la direction de propagation (Dp) du rayonnement lumineux ;
- un deuxième photodétecteur (50) configuré pour capter un deuxième signal de diffusion émis par des particules traversant la zone de détection (115) dans une deuxième direction (D2) formant un deuxième angle (θ2) non nul avec la direction de propagation (Dp) du rayonnement lumineux, le deuxième angle (θ2) étant différent du premier angle (θ1) et les premier et deuxième angles (θ1, θ2) n'étant pas supplémentaires ;
- un piège de lumière (60) configuré pour recevoir le rayonnement lumineux en sortie de la zone de détection (115) de manière à empêcher un retour parasite du rayonnement lumineux vers la zone de détection (115).

12. Capteur (1) selon l'une quelconque des revendications précédentes, **caractérisé en ce que** le canal interne (10) comporte une zone de détection (115) et **en ce que** le capteur (1) comporte en outre un dispositif de chauffage d'un flux d'air circulant dans le canal interne (10), le dispositif de chauffage comportant au moins un élément chauffant par effet Joule (R1, R2, R3) agencé sur une paroi du canal interne en amont (114) de la zone de détection (115).

**Patentansprüche**

1. Sensor (1) zum Messen der Teilchenkonzentration in der Luft in Echtzeit, aufweisend einen inneren Kanal (10) mit:

   - einem ersten Abschnitt (100), der eine Seitenwand (103) aufweist, der sich zwischen einem ersten offenen Ende (101) und einem zweiten geschlossenen Ende (102) erstreckt, wobei sich das erste offene Ende (101) gemäß einer Eingangsebene (Pe) erstreckt;
   - einem zweiten Abschnitt (110), der mit dem ersten Abschnitt über eine erste Öffnung (105) in der Seitenwand (103) des ersten Abschnitts (100) kommuniziert, wobei die erste Öffnung zu dem ersten offenen Ende benachbart ist;
   - einer Speicherzone (120), die mit dem ersten Abschnitt über eine zweite Öffnung (107) in der Seitenwand (103) des ersten Abschnitts (100) kommuniziert, wobei die zweite Öffnung zu dem zweiten geschlossenen Ende benachbart ist, wobei die erste und zweite Öffnung (105, 107) beiderseits der Seitenwand (103) eingerichtet sind;
   - einer Ablenkplatte (130), die an einer Verbindung zwischen dem ersten offenen Ende (101) des ersten Abschnitts (100) und dem zweiten Abschnitt (110) befestigt ist, wobei sich die Ablenkplatte (130) im Inneren des ersten Abschnitts (100) erstreckt und mit einer ersten normalen Richtung (D1) zur Eingangsebene (Pe) einen Winkel α bildet, derart dass:
   $$0° < \alpha < 90°$$

   wobei die Ablenkplatte (130), der erste Abschnitt (100) und die erste und zweite Öffnung (105, 107) derart bemessen sind, dass in einem Luftstrom, der in den Sensor (1) durch das erste offene Ende (101) eintritt und erste Teilchen mit einem Durchmesser von unter oder gleich 10 μm und zweite Teilchen mit einem Durchmesser von über 10 μm aufweist, die ersten Teilchen von der Ablenkplatte (130) abgelenkt werden, die erste Öffnung (105) durchqueren und in den zweiten Abschnitt (110) des inneren Kanals (10) gelangen, wohingegen die zweiten Teilchen von der Ablenkplatte (130) abgelenkt werden, von einem Teil der Seitenwand (103) abprallen, der eine Prallplatte (103-i) bildet, die zweite Öffnung (107) durchqueren und in die Speicherzone (120) gelangen.

2. Sensor (1) nach vorangehendem Anspruch, wobei der zweite Abschnitt (110) des inneren Kanals (10) ein erstes offenes Ende (111) aufweist, das mit dem ersten Abschnitt des inneren Kanals kommuniziert, und ein zweites offenes Ende (112), **dadurch gekennzeichnet, dass** der Sensor eine Vorrichtung (20) zum Inzirkulationversetzen eines Luftstroms im inneren Kanal aufweist, wobei die Vorrichtung (20) am zweiten Ende (112) des zweiten Abschnitts (110) des inneren Kanals eingerichtet ist und ausgelegt ist, um einen Luftstrom ab dem ersten Ende (101) des ersten Abschnitts (100) des inneren Kanals zum zweiten Ende (112) des zweiten Abschnitts (110) des inneren Kanals in Zirkulation zu versetzen.

3. Sensor (1) nach vorangehendem Anspruch, **dadurch gekennzeichnet, dass** die Vorrichtung (20) zum Inzirkulationversetzen eines Luftstroms im inneren Kanal ein Lüfter oder eine Pumpe ist.

4. Sensor (1) nach einem der vorangehenden Ansprüche, in dem eine erste Strömungsfläche (S1) definiert ist, die die Fläche nach der Eingangsebene (Pe) des ersten offenen Endes (101) ist, und eine zweite Strömungsfläche (S2) definiert ist, die die kleinste Strömungsfläche des ersten Abschnitts (100) ist, definiert zwischen dem Ende der Ablenkplatte (130) und der Seitenwand (103), wobei der Sensor (1) **dadurch gekennzeichnet ist, dass** das Verhältnis S2/S1 der zweiten Fläche (S2) zur ersten Fläche (S1) derart ist, dass:

$$10\% \leq \frac{S2}{S1} \leq 90\%$$

5. Sensor (1) nach einem der vorangehenden Ansprüche, wobei der zweite Abschnitt (110) des inneren Kanals ein erstes offenes Ende (111) aufweist, das mit dem ersten Abschnitt des inneren Kanals kommuniziert, und ein zweites offenes Ende (112), und der zweite Abschnitt (110) des inneren Kanals eine Detektionszone (115), eine vorgelagerte Zone (114) zwischen dem ersten Ende und der Detektionszone und eine nachgelagerte Zone (116) zwischen der Detektionszone und dem zweiten Ende aufweist, wobei der Sensor (1) **dadurch gekennzeichnet ist, dass**:

- der zweite Abschnitt (110) des inneren Kanals eine gebogene Form aufweist, und
- die vorgelagerte Zone (114) des inneren Kanals einen geneigten Abschnitt aufweist, der sich zwischen dem ersten Ende (111) des inneren Kanals und der Detektionszone (115) erweitert,

- wobei der geneigte Abschnitt einen Winkel $\beta$ bildet, gemessen in Bezug auf die Vertikale, derart, dass: $60° < \beta < 80°$, und
- sich der geneigte Abschnitt von 150 $\mu$m$^2$ bis 300 $\mu$m$^2$ je mm Länge erweitert.

**6.** Sensor (1) nach einem der vorangehenden Ansprüche, **dadurch gekennzeichnet, dass** die Speicherzone (120) ein Volumen aufweist, das zwischen 0,5 mL und 5 mL liegt.

**7.** Sensor (1) nach einem der vorangehenden Ansprüche, **dadurch gekennzeichnet, dass** der erste Abschnitt (100) des inneren Kanals (10) runden Querschnitts ist und dass der Sensor (1) ein Adapterteil (Pa) in Form eines hohlen Zylinders mit rundem Querschnitt aufweist, wobei das Adapterteil (Pa) im Bereich des ersten offenen Endes (101) des ersten Abschnitts (100) über den Sensor (1) hinausragt.

**8.** Sensor (1) nach einem der vorangehenden Ansprüche, **dadurch gekennzeichnet, dass**:

- der zweite Abschnitt (110) ein erstes offenes Ende (111) aufweist, das mit dem ersten Abschnitt (100) kommuniziert, und ein zweites offenes Ende (112); eine Detektionszone (115); eine vorgelagerte Zone (114) zwischen dem ersten Ende (111) und der Detektionszone (115); und eine nachgelagerte Zone (116) zwischen der Detektionszone (115) und dem zweiten Ende (112);
- der zweite Abschnitt (110) eine gebogene Form mit einem ersten geraden Schenkel, der mit einem zweiten geraden Schenkel durch eine Verbindung verbunden ist, die etwa senkrecht zum ersten und zweiten geraden Schenkel ist, derart aufweist, dass die vorgelagerte Zone (114) den ersten geraden Schenkel aufweist, die nachgelagerte Zone (116) den zweiten geraden Schenkel aufweist und sich die Detektionszone (115) in der Verbindung zwischen dem ersten und zweiten geraden Schenkel befindet.

**9.** Sensor (1) nach vorangehendem Anspruch, **dadurch gekennzeichnet, dass** die vorgelagerte Zone (114) ferner mindestens einen Abschnitt aufweist, der mit dem ersten und zweiten Knie (C1, C2) eine S-Form aufweist.

**10.** Sensor (1) nach einem der vorangehenden Ansprüche, wobei sich der innere Kanal an jedem Punkt gemäß einer Richtung Dc erstreckt und unter "Querschnitt eines Abschnitts des inneren Kanals" ein zu der Richtung Dc normaler Querschnitt zu verstehen ist, **dadurch gekennzeichnet, dass**:

- der zweite Abschnitt (110) ein erstes offenes Ende (111) aufweist, das mit dem ersten Abschnitt (100) kommuniziert, und ein zweites offenes Ende (112); eine Detektionszone (115); eine vorgelagerte Zone (114) zwischen dem ersten Ende (111) und der Detektionszone (115); und eine nachgelagerte Zone (116) zwischen der Detektionszone (115) und dem zweiten Ende (112); und
- die vorgelagerte Zone (114) des zweiten Abschnitts (110) ein Laminarisierungselement (EL1, EL2) aufweist, das mindestens eine Platte aufweist, die aus einer Seitenwand des zweiten Abschnitts radial hervorsteht, wobei die mindestens eine Platte eine radial gemessene Höhe H aufweist und deren Verhältnis zur radial gemessenen Gesamthöhe Ht zwischen der Seitenwand und dem Zentrum des Querschnitts derart ist, dass: $10\ \% \leq H/Ht \leq 100\ \%$.

**11.** Sensor (1) nach einem der vorangehenden Ansprüche, **dadurch gekennzeichnet, dass** der innere Kanal (10) eine Detektionszone (115) aufweist und dass der Sensor (1) ferner aufweist:

- eine Lichtquelle (30), die ausgelegt ist, um eine Lichtstrahlung in einer Ausbreitungsrichtung (Dp) zu senden, wobei die Lichtstrahlung in der Detektionszone (115) des inneren Kanals fokussiert ist;
- einen ersten Photodetektor (40), der ausgelegt ist, um ein erstes Verbreitungssignal aufzufangen, das von den Teilchen, die die Detektionszone (115) durchqueren, in einer ersten Richtung (D1) gesendet wird, wobei die erste Richtung (D1) einen ersten Winkel ($\Theta$1) ungleich Null mit der Ausbreitungsrichtung (Dp) der Lichtstrahlung bildet;
- einen zweiten Photodetektor (50), der ausgelegt ist, um ein zweites Verbreitungssignal aufzufangen, das von den Teilchen, die die Detektionszone (115) durchqueren, in einer zweiten Richtung (D2) gesendet wird, wobei die zweite Richtung (D2) einen zweiten Winkel ($\Theta$2) ungleich Null mit der Ausbreitungsrichtung (Dp) der Lichtstrahlung bildet, wobei sich der zweite Winkel ($\Theta$2) vom ersten Winkel ($\Theta$1) unterscheidet und der erste und zweite Winkel (Θ1, Θ2) keine Ergänzungswinkel sind;
- eine Lichtfalle (60), die ausgelegt ist, um die Lichtstrahlung am Ausgang aus der Detektionszone (115) derart zu empfangen, dass eine Störrücksendung der Lichtstrahlung zu der Detektionszone (115) verhindert wird.

**12.** Sensor (1) nach einem der vorangehenden Ansprüche, **dadurch gekennzeichnet, dass** der innere Kanal (10) eine Detektionszone (115) aufweist und dass der Sensor (1) ferner eine Heizvorrichtung eines Luftstroms aufweist, der in dem inneren Kanal (10) zirkuliert, wobei die Heizvorrichtung mindestens ein Heizelement durch Joule-Effekt (R1, R2, R3) aufweist, das auf einer Wand des inneren Kanals vorgelagert (114) zur Detektionszone (115) eingerichtet ist.

## Claims

**1.** Sensor (1) for measuring in real time the concentration of particles in air comprising an inner channel (10) having:

- a first portion (100) comprising a side wall (103) extending between a first open end (101) and a second closed end (102), the first open end (101) extending along an inlet plane (Pe);
- a second portion (110) communicating with the first portion via a first opening (105) in the side wall (103) of the first portion (100), the first opening being adjacent to the first open end;
- a storage zone (120) communicating with the first portion via a second opening (107) in the side wall (103) of the first portion (100), the second opening being adjacent to the second closed end, the first and second openings (105, 107) being arranged on either side of the side wall (103);
- a baffle plate (130) fixed to a junction between the first open end (101) of the first portion (100) and the second portion (110), the baffle plate (130) extending inside the first portion (100) and forming with a first direction (D1) normal to the inlet plane (Pe) an angle $\alpha$ such that:

$0° < \alpha < 90°$

the baffle plate (130), the first portion (100) and the first and second openings (105, 107) being dimensioned in such a way that in an air stream entering into the sensor (1) through the first open end (101) and comprising first particles of diameter less than or equal to 10 $\mu$m and second particles of diameter greater than 10 $\mu$m, the first particles are deflected by the baffle plate (130), pass through the first opening (105) and arrive in the second portion (110) of the inner channel (10) whereas the second particles are deflected by the baffle plate (130), impacted by a part of the side wall (103) forming an impaction plate (103-i), pass through the second opening (107) and arrive in the storage zone (120).

**2.** Sensor (1) according to the preceding claim, in which the second portion (110) of the inner channel (10) has a first open end (111) communicating with the first portion of the inner channel and a second open end (112), **characterised in that** the sensor comprises a device (20) for circulating an air stream in the inner channel, said device (20) being arranged at the second end (112) of the second portion (110) of the inner channel and being configured to make an air stream circulate from the first end (101) of the first portion (100) of the inner channel to the second end (112) of the second portion (110) of the inner channel.

**3.** Sensor (1) according to the preceding claim, **characterised in that** the device (20) for circulating an air stream in the inner channel is a fan or a pump.

**4.** Sensor (1) according to any one of the preceding claims in which it is defined a first flow surface (S1), which is the surface along the inlet plane (Pe) of the first open end (101), and a second flow surface (S2), which is the smallest flow surface of the first portion (100), defined between the end of the baffle plate (130) and the side wall (103), the sensor (1) being **characterised in that** the ratio S2/S1 of the second surface (S2) over the first surface (S1) is such that:

$$10\% \leq \frac{S2}{S1} \leq 90\%$$

**5.** Sensor (1) according to any one of the preceding claims, in which the second portion (110) of the inner channel has a first open end (111) communicating with the first portion of the inner channel and a second open end (112), and the second portion (110) of the inner channel comprises a detection zone (115), an upstream zone (114) between the first end and the detection zone and a downstream zone (116) between the detection zone and the second end, the sensor (1) being **characterised in that**:

> - the second portion (110) of the inner channel has a folded back shape, and
> - the upstream zone (114) of the inner channel has an inclined portion widening between the first end (111) of the inner channel and the detection zone (115),
>
>> - the inclined portion forming an angle $\beta$, measured with respect to the vertical, such that: $60° \leq \beta \leq 80°$, and
>> - the inclined portion widening by 150 $\mu m^2$ to 300 $\mu m^2$ per mm of length.

6. Sensor (1) according to any one of the preceding claims, **characterised in that** the storage zone (120) has a volume comprised between 0.5 mL and 5 mL.

7. Sensor (1) according to any one of the preceding claims, **characterised in that** the first portion (100) of the inner channel (10) is of circular section and **in that** the sensor (1) comprises an adaptor piece (Pa) of hollow cylinder shape of circular section, the adaptor piece (Pa) projecting from the sensor (1) at the first open end (101) of the first portion (100).

8. Sensor (1) according to any one of the preceding claims, **characterised in that**:

> - the second portion (110) has a first open end (111) which communicates with the first portion (100) and a second open end (112); a detection zone (115); an upstream zone (114) between the first end (111) and the detection zone (115); and a downstream zone (116) between the detection zone (115) and the second end (112) ;
> - the second portion (110) has a folded back shape with a first rectilinear branch connected to a second rectilinear branch by a link substantially perpendicular to the first and second rectilinear branches, in such a way that the upstream zone (114) comprises the first rectilinear branch, the downstream zone (116) comprises the second rectilinear branch and the detection zone (115) is found in the link between the first and second rectilinear branches.

9. Sensor (1) according to the preceding claim, **characterised in that** the upstream zone (114) further comprises at least one portion having an S shape with first and second bends (C1, C2).

10. Sensor (1) according to any one of the preceding claims, in which the inner channel extends at each point along a direction Dc and "section of a portion of the inner channel" is taken to mean a section normal to the direction Dc, **characterised in that**:

> - the second portion (110) has a first open end (111) which communicates with the first portion (100) and a second open end (112); a detection zone (115); an upstream zone (114) between the first end (111) and the detection zone (115); and a downstream zone (116) between the detection zone (115) and the second end (112); and
> - the upstream zone (114) of the second portion (110) comprises a laminarisation element (EL1, EL2), which comprises at least one plate projecting radially from a side wall of the second portion, said at least one plate having a height H measured radially and of which the ratio over the total height Ht measured radially between the side wall and the centre of the section is such that: $10\% \leq H/Ht \leq 100\%$.

11. Sensor (1) according to any one of the preceding claims, **characterised in that** the inner channel (10) comprises a detection zone (115) and **in that** the sensor (1) further comprises:

> - a light source (30) configured to emit light radiation in a direction of propagation (Dp), the light radiation being focused in the detection zone (115) of the inner channel;
> - a first photodetector (40) configured to capture a first scattering signal emitted by particles traversing the detection zone (115) in a first direction (D1) forming a first non-zero angle ($\theta$1) with the direction of propagation (Dp) of the light radiation;
> - a second photodetector (50) configured to capture a second scattering signal emitted by particles traversing the detection zone (115) in a second direction (D2) forming a second non-zero angle ($\theta$2) with the direction of propagation (Dp) of the light radiation, the second angle ($\theta$2) being different from the first angle ($\theta$1) and the first and second angles ($\theta$1, $\theta$2) not being supplementary;
> - a light trap (60) configured to receive the light radiation at the outlet of the detection zone (115) so as to prevent parasitic return of the light radiation to the detection zone (115).

12. Sensor (1) according to any one of the preceding claims, **characterised in that** the inner channel (10) comprises a detection zone (115) and **in that** the sensor (1) further comprises a device for heating an air stream circulating in the inner channel (10), the heating device comprising at least one Joule effect heating element (R1, R2, R3) arranged on a wall of the inner channel upstream (114) of the detection zone (115).

**Fig. 1**

**Fig. 2a**

**Fig. 2b**

**Fig. 2c**

**Fig. 3a**

**Fig. 3b**

**Fig. 3c**

**Fig. 3d1**

**Fig. 3d2**

**Fig. 3d3**

**Fig. 4a**

**Fig. 4b**

**Fig. 5**

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- WO 2016065465 A1
- EP 2679985 A2
- US 2005190058 A1